# EUROPEAN PATENT APPLICATION

(11) **EP 4 640 631 A1**
(43) Date of publication of application: **29.10.2025**
(21) Application number: 24172559.7
(22) Date of filing: 25.04.2024
(51) Int. Cl.: C01C 1/04, C07C 31/04, G05D 7/01, F16K 15/02, F16K 15/06, F16K 15/18

(54) **A METHOD FOR CONTROLLING THE FLOW IN A GAS LINE OF AN AMMONIA PLANT OR OF A METHANOL PLANT AT REDUCED LOAD**

(71) Applicant: CASALE SA, 6900 Lugano (CH)
(72) Inventor: PIN, Mattia, 22100 Como (IT); CINCERA, Silvia Maria, 22100 Como (IT); GALIMBERTI, Leonardo Angelo, 22013 Vercana (CO) (IT); MENNA, Fabrizio, 6982 Agno (CH); BARATTO, Francesco, 22100 Como (IT); COLMEGNA, Giacomo, 6900 Massagno (CH)
(74) Representative: M. Zardi & Co S.A.

(57) **Abstract**

A method for controlling the flow in a gas line of an ammonia plant or of a methanol plant operating at a reduced load, the method including the provision of a plate check valve or a nozzle check valve on said gas line to prevent reverse flow; the plate check valve may be associated to a valve unloader to open the valve at low flow condition.

## Description

### Field of application

The invention relates to the field of industrial synthesis of ammonia and industrial synthesis of methanol.

### Prior art

The industrial production of ammonia and the industrial production of methanol have in common the essential steps of: generation of a make-up gas (MUG) in a front-end and conversion of said makeup gas in a so-called synthesis loop at elevated pressure.

The synthesis loop includes a catalytic converter wherein the makeup gas is reacted under appropriate temperature and pressure. The effluent of the converter typically contains unconverted reagents which are separated and recycled to the converter thus forming the synthesis loop.

The synthesis pressure is typically much higher than the pressure of the makeup gas generated in the front-end. A main compressor raises the pressure of the make-up gas to feed the loop. A circulator stage compressor maintains circulation in the loop and compensates for the pressure losses in the piping of the loop.

Both the synthesis of ammonia and synthesis of methanol rely basically on the production of hydrogen. The ammonia make-up gas is essentially a mixture of hydrogen and nitrogen in a suitable proportion, wherein nitrogen may be added with combustion air in a secondary reformer or separately when available, e.g. from an air separation unit. In methanol synthesis, the make-up gas is essentially a mixture of hydrogen and carbon monoxide.

After decades in which the production of hydrogen for ammonia make-up gas or methanol make-up gas was based essentially on reforming or gasification of hydrocarbons, a great interest emerged in recent years about the more environmentally acceptable production of hydrogen from renewable energy. For example, hydrogen can be produced efficiently from solar-powered or wind-powered water electrolysis. Ammonia plants or methanol plants where part or all of the hydrogen feed comes from renewable energy are called "green" plants.

Most sources of renewable energy, however, are intermittent. Conventional ammonia or methanol plant, developed over the years to operate with hydrocarbon sources, are designed to run at or close to 100% of the nominal capacity. A challenge of the production of ammonia or methanol from renewable energy is represented by the need to make the entire process more flexible and adaptable to run and remain stable at low capacity.

The flexibility of a plant denotes the ability of the plant to operate at a load variable in a wide operating range. The flexibility of conventional, fossil fuel-based ammonia plants and methanol plants is generally limited, for example 70% to 100%, meaning that the plant is not expected to operate continuously at a partial load less than 70%, whereas the flexibility of a plant using renewable energy may be much broader, such as 20% to 100% or 10% to 100%, meaning the plant must be able to operate safely at a small fraction of the nominal capacity. The capacity can be defined as the amount of fresh make-up gas delivered to the synthesis loop.

One of the issues faced at such low loads concerns the operation of check valves. The provision of check valves is a known measure to avoid reverse flow in a line, for example at the delivery of a compressor. A check valve is designed to allow flow in one direction only ("positive" flow). Known check valves include the so-called plate check valve wherein the plug is realized by one or more spring-loaded moving plates or discs. In the presence of a positive flow, the plug is opened by the fluid flow overcoming the force of the spring; in case of a reverse flow the valve closes automatically. Typically, a check valve is a passive device, as opening is caused by the flow rate in the positive direction and closing is caused by suitable biasing means such as a spring.

In a condition of a wide operating range of a flow, a plate check valve may suffer from instability. A flow significantly lower than the nominal flow may not be able to fully open the valve in a safe and stable manner, causing the moving plates to "float" between the open position and close position, with potential risks of damaging the valve itself or other equipment, e.g. inducing unstable operation of a compressor and/or vibration of the piping. The turndown ratio of a valve denotes its ability to safely operate in a condition of flow varying in a wide operating range.

A damage of a check valve may lead to a loss of tightness, which is dangerous for many reasons. For example, a check valve on the delivery line of a compressor separates a high-pressure section from a low-pressure section of the plant and failure of the valve may cause overpressure and damage to the low-pressure section. In other cases, a check valve is installed at a mixing point of different gaseous streams and a failure of the valve may cause contamination of different lines. For example, in ammonia plants it is common to add nitrogen to a hydrogen stream is order to produce a syngas with a suitable H/N ratio, and a check valve can be provided at a point where a nitrogen stream is injected into a hydrogen stream. A failure of a check valve in this position may cause the nitrogen line to be contaminated with hydrogen with serious hazard.

Apart from the above, improper operation of a check valve may induce a pulsating flow with the risk of damaging the pipes and related supports, and/or induce unstable operation of a compressor.

Based on conventional wisdom, plate check valves can operate safely with 50% to 100% of their nominal flow. Accordingly, they are not considered suitable for applications requiring a high turndown ratio as defined above. The production of green ammonia or green methanol requires a turndown well below 50%.

### Summary of the invention

The applicant has investigated the operation of plate check valves in gas lines of ammonia plants and methanol plants. In a first aspect of the invention, the applicant has found that plate check valves and nozzle check valves are suitable for use in gas lines of ammonia plants or methanol plants, even under conditions of wide operating range, when the flow rate in the gas line falls below 50% of the nominal flow rate.

Accordingly, an aspect of the invention is a method for controlling the flow in a gas line of an ammonia plant or of a methanol plant, wherein said plant has an operating range varying from a nominal load of 100% to a condition of low load of 50% or less of the nominal load, wherein the gaseous flow rate in said gas line ranges, as a consequence of the load of the plant, from a nominal flow rate to a minimum flow rate of continuous operation equal to 50% or less of the nominal flow rate, the method including the provision of a plate check valve or the provision of a nozzle check valve on said gas line to prevent reverse flow.

The minimum flow rate of continuous operation denotes a flow rate that can be maintained for a significant duration of time.

The plate check valve is preferably of the type including at least one axially displaceable spring-loaded plate, moving between an open position and a close position. A nozzle check valve includes typically a disc as sealing member mounted on an axially-displaceable shaft opposed by a spring. In a preferred embodiment the displacement of the disc is opposed in sequence by a first spring and a second spring, the second spring being stronger to ensure fast reaction to close the valve.

In addition to the above, the invention faces the problem of how to ensure stable operation of a check valve in a gas line under conditions of high variability of the flow rate. According to an interesting solution to this problem, the check valve is connected to a valve unloader, arranged to keep the check valve open under selected conditions of flow rate in the gas line, to avoid unstable operation of the check valve. Said valve unloader is preferably associated to a control system adapted to disengage the valve unloader, and restore the passive operation of the check valve, when the flow rate is sufficient for normal operation of the check valve and/or when a risk of reverse flow is detected. The valve unloader is used preferably in conjunction with a plate check valve.

### Description of the invention

The invention relates to the use of a plate check valve or nozzle check valve in a gas line of an ammonia plant or a methanol plant, when said plant has a wide operating range (high turndown ratio of the valve) from a nominal load to a minimum load which is less than 50% of the nominal load, such as 40%, 30%, 20% or 10% of the nominal load. Accordingly, the flexibility of the plant may be, for example 40% to 100% or 30% to 100% or 20% to 100% or 10% to 100%. In some embodiments the minimum load may be even less than 10%, such as 5%, of the nominal load.

Ammonia or methanol plants wherein the production of a feed stream employs usage of renewable energy, are characterised by a wide operating range of the load, for example in applications wherein a hydrogen feed is produced, at least in part, from electrolysis of water powered with renewable energy. Accordingly, an embodiment of the invention includes that: the plant uses at least one renewable source of power for the production of at least part of the feed reactants for the synthesis process, and the variation of the load of the plant and variation of the flow rate of said gas line is determined, at least partially, by the fluctuation of the power available from said source.

The gas line where the check valve is installed is preferably a feed line of any of: hydrogen, nitrogen, ammonia, carbon dioxide, a synthesis gas such as a mixture of hydrogen and nitrogen. The invention is based on the judicious finding that a plate check valve or nozzle check valve, applied to such gas lines of ammonia or methanol plants, is adapted to operate in a safe and stable manner even below 50% of nominal flow rate.

Preferred locations of said check valve include any of: a delivery side of a compressor, a suction side of a compressor, an intermediate compressor stage, a mixing point. For example, a mixing point can be a point where a nitrogen stream is mixed with a hydrogen stream for obtaining ammonia make-up gas. The nitrogen stream may be produced for example by an air separation unit.

An interesting embodiment of the invention includes the provision of a valve unloader adapted, when engaged, to force the opening of the check valve under selected conditions of reduced flow rate. The unloader is connected to the check valve so that the valve is forced to remain open when the valve unloader is engaged, whilst the check valve operates normally in response to the gaseous flow when the unloader is disengaged.

A valve unloader, as such, is a known device, which is typically used in reciprocating compressors to force opening of a suction valve and adjust the delivery rate of the compressor. In a common embodiment, a valve unloader operates pneumatically and comprises essentially an actuator, a positioner, a solenoid valve, and a valve stem. In the present invention, a valve unloader is used in a novel way associated to a plate check valve, keeping the valve open when, due to reduced flow rate, the valve is exposed to the risk of unstable operation.

In this embodiment the check valve is modified to become an actuated device, deviating from the common approach to a check valve as a fully passive device. In a preferred embodiment the passive operation of the valve is restored, by disengaging the valve unloader, when the forced opening is not necessary and/or the passive operation is preferred for safety reasons.

A condition in which the passive operation is preferred may include a condition of incipient reverse flow. The invention may include the provision of a safeguard control configured to disengage said valve unloader and restore passive operation of the check valve upon detection of a condition of reverse flow or of incipient reverse flow in the gas line. An embodiment includes the provision of sensor means adapted to measure at least one parameter of the flow rate in the gas line and including the step of determining said condition of reverse flow or incipient reverse flow based on said at least one parameter.

The invention may include the provision of a control system adapted to engage or disengage said valve unloader according to the current flow rate in the gas line. The engagement or disengagement of the valve unloader is preferably controlled based on at least one parameter which is directly or indirectly representative of the flow rate in the gas line. In a preferred approach, the valve unloader is engaged when the flow rate is in a selected range which corresponds to a condition of low load of the plant, wherein the passive operation of the valve is potentially subject to instability. Said range may be delimited by a lower bound and an upper bound, wherein the upper bound corresponds to the minimum flow rate for passive operation of the valve, and the lower bound corresponds to the flow in the line where the plant is in the condition of minimum load of operation.

In addition, the control system may be configured to disengage the valve unloader whenever a reverse flow, or a condition of incipient reverse flow, is detected. This safeguard disengagement would overrule any other control of the valve unloader.

In a preferred embodiment, the control system includes a first switch and a second switch corresponding to said upper bound and lower bound of flow rate. The first switch (switch-high or SH) identifies the upper bound and is active when the flow rate is above the upper bound. The second switch (switch-low or SL) is active when the flow rate is above the lower bound. Accordingly, the control system may operate as follows:
SL and SH active: the flow rate is outside the range of forced aperture and above the upper limit, the check valve can operate normally, the valve unloader is disengaged;
SL active, SH inactive: the flow rate is in the range of forced aperture; the unloader is engaged;
SL and SH inactive: the flow rate is below minimum, the condition is recognized as incipient backflow, the unloader is disengaged for safety.

In a highly preferred embodiment, said at least one parameter includes a difference of pressure between a first pressure p1 measured at a point upstream the check valve and a second pressure p2 measured at point downstream the check valve, the direction upstream-downstream being according to the forward direction of flow allowed by the check valve.

The difference of pressure may be used to trigger the safeguard disengagement of the valve unloader and, preferably, also to trigger a disengagement when passive operation of the valve is possible without instability. A difference of pressure falling below a safety value, or falling below zero, is interpreted as incipient reverse flow and leads to immediate disengagement of the valve unloader. A difference of pressure above a reference value may be interpreted to denote a sufficient flow rate for normal operation of the valve without the unloader.

A control system of the valve unloader may be configured to:
disengage the valve unloader when the pressure drop is equal to or greater than a reference value corresponding to a minimum flow rate for passive operation of the check valve,
engage the valve unloader when the pressure drop is less than said reference value, but equal to or greater than a safety value corresponding to incipient reverse flow;
disengage the valve unloader when the pressure drop is less than said safety value.

### Description of the figures

Figs. 1 is a simplified scheme of a loop for the synthesis of ammonia.
Fig. 2 illustrates a simplified cross section of a plate check valve according to an embodiment.
Fig. 3 is a scheme of an embodiment including a valve unloader associated to the plate check valve.
Fig. 4 illustrates an example of connection of a valve unloader to the plate check valve.
Fig. 5 illustrates another example of connection of a valve unloader to the plate check valve.

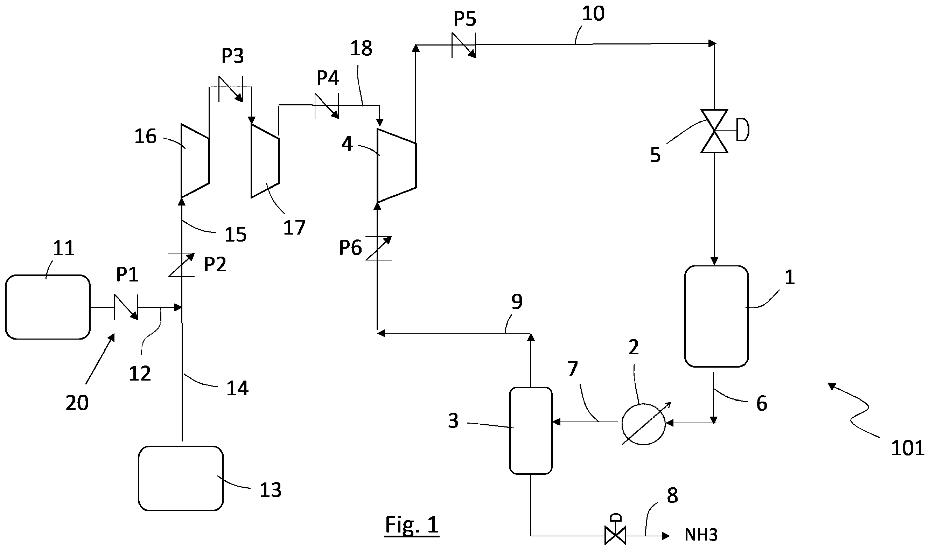

Fig. 1 illustrates an ammonia synthesis loop 101 including:
- 1: Converter
- 2: Cooler/condenser of the converter effluent
- 3: Separator
- 4: Circulation compressor
- 5: Main feed valve of the converter
- 6: Hot gas effluent from the converter 1
- 7: Cooled effluent
- 8: Liquid product containing ammonia
- 9: Unreacted gas recycled to the converter 1
- 10: Discharge line of the compressor 4, feeding the converter 1
- 11: Hydrogen front-end
- 12: Hydrogen feed line
- 13: Nitrogen source
- 14: Nitrogen feed line
- 15: Make-up gas (mixture of hydrogen and nitrogen)
- 16: First stage of main compressor ("make-up gas compressor")
- 17: Second stage of the make-up gas compressor
- 18: Input of make-up gas to the loop 101

The loop 101 depicted in Fig. 1 is typical to ammonia plants and is not described in detail. A loop for the synthesis of methanol is similar.

In the example, the hydrogen feed 12 is provided by a front-end 11 which may use a renewable energy source for the production of at least part of the hydrogen. The nitrogen source 13 can be an air separation unit.

Fig. 1 illustrates possible locations P1 to P6 of a plate check valve 20. The locations P1 and P2 are provided in the hydrogen line and nitrogen line, respectively, to avoid contamination. Location P3 is inter-stage between the stages of the main syngas compressor. Location P4 is at the feed line of the loop and separates a low-pressure section from a high-pressure section. Locations P5 and P6 are, respectively, at the suction side and delivery side of the circulator 4. A plate check valve can be provided in one or more of said locations, to ensure safe operation of the loop.

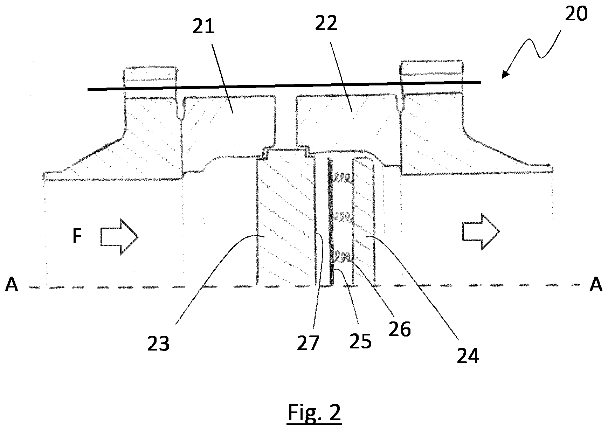

Fig. 2 is an example of a plate check valve 20. Essentially, the valve 20 includes a first flange 21 and a second flange 22; a valve seat 23, a valve guard 24, a plate 25 associated to the valve guard 24 via springs 26. The valve seat 23 and valve guard 24 are connected by an axial bolt (not shown). The arrow F denotes the direction of flow ("positive flow") allowed by the check valve. A-A denotes the longitudinal axis of the valve.

The valve seat 23 and the valve guard 24 are perforated to allow passage of flow. The plate 25 is perforated with a pattern of holes staggered relative to the passages in the valve seat 23. Accordingly, when the plate 25 is pushed by the springs 26 against the front surface 27 of the seat 23, the valve is closed and flow is prevented. The positive flow F overcomes the force of the springs 26 and displaces the plate 25 away from the seat 23, allowing the fluid passage. A reverse flow is clearly prevented as it would immediately cause the closing of the valve.

In other embodiments (not shown) the check valve is a nozzle check valve including a disc axially displaceable on a shaft against one or more springs. The disc closes the fluid passage by acting against a suitable seat. In operation, the flow pushes the disc against the spring; in absence of a positive flow, the spring closes the disc.

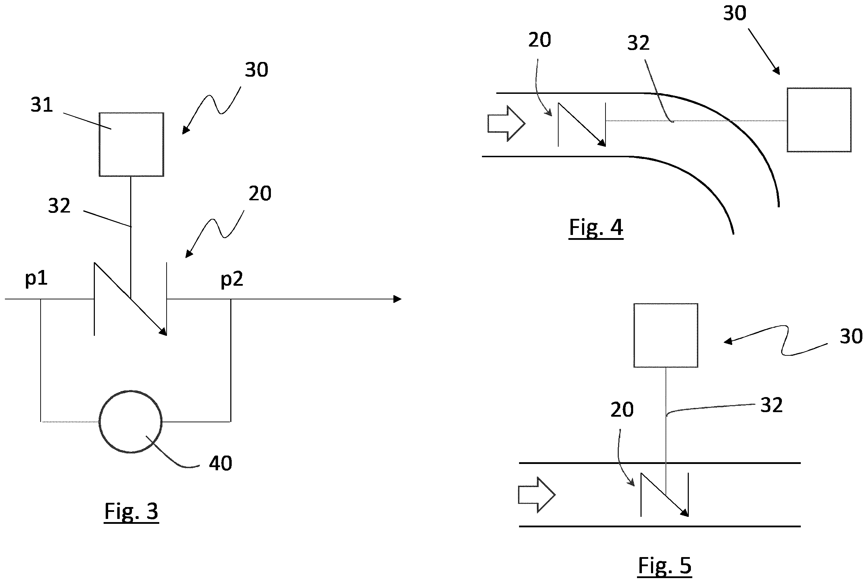

Fig. 3 illustrates a preferred embodiment wherein the valve 20 is associated to a vale unloader 30. The valve unloader 30 includes an actuator 31 and a valve stem 32 connected to the internal plate 25 of the valve. The valve unloader 30, when engaged, forces the valve 20 to remain open irrespective of the flow rate passing through the valve.

In Fig. 3, a differential pressure controller 40 detects the difference between a pressure p1 measured upstream the valve 20 and a pressure p2 measured downstream the valve. In this example, therefore, the difference of pressure across the check valve is used to determine the flow condition.

The difference of pressure Dp = (p1 - p2) is sent to a control system and triggers engagement or disengagement of the valve unloader. For example, the valve unloader is engaged if Dp indicates a reduced flow rate within a range, such as 10% to 50%, wherein the valve may suffer from instability. The valve unloader is disengaged if Dp indicates a sufficient flow rate (such as greater than 50%) or if Dp indicates an incipient reverse flow. In some embodiments, a negative Dp is assumed as indication of reverse flow and triggers the disengagement of the unloader.

In accordance with the above, the undesirable instability of the internal plate is avoided even in a condition of very low flow rate, such as 10% of the nominal flow rate, because the valve is kept open by the unloader. However, disengaging the unloader when the switch low is triggered maintains the original function of the valve to close automatically in case of a reverse flow.

Fig. 4 illustrates an example of how to connect the valve unloader 30 to the valve 20 in correspondence of a bend of the piping. Alternatively, a valve unloader can be installed in-line along a straight portion of pipe (Fig. 5).

## Claims

1. A method for controlling the flow in a gas line of an ammonia plant or of a methanol plant, wherein said plant has an operating range from a nominal load of 100% to a partial load of less than 50% of the nominal load, wherein a partial load of the plant determines a reduced flow rate in said gas line, ranging from a nominal flow rate to a minimum flow rate of continuous operation, the method including the provision of a plate check valve (20) or the provision of a nozzle check valve on said gas line to prevent reverse flow.

2. A method according to claim 1 wherein said minimum flow rate in the gas line is any of: 40%, 30%, 20%, 10% of the nominal flow rate in the same line.

3. A method according to claim 1 or 2 wherein said gas line is a feed line of any of: hydrogen, nitrogen, ammonia, carbon dioxide, a synthesis gas such as a mixture of hydrogen and nitrogen.

4. A method according to any of the previous claims wherein the plant uses at least one renewable source of power for the production of at least part of the feed reactants for the synthesis process, and the variation of the load of the plant and variation of the flow rate of said gas line is determined, at least partially, by the fluctuation of the power available from said source.

5. A method according to claim 4 wherein the plant uses at least one renewable source of power for the production of a hydrogen feed, and said hydrogen feed is used for production of a make-up gas which is reacted to obtain ammonia or methanol.

6. A method according to any of the previous claims wherein said gas line includes one or more of the following: a delivery line of a compressor, a suction line of a compressor, a line connecting subsequent stages of a multistage compressor, a line transporting a gas mixture downstream a mixing point.

7. A method according to any of the previous claims, wherein the check valve (20) includes at least one axially-displaceable spring-loaded sealing member (25) having the shape of a plate or of a disc.

8. A method according to any of the previous claims including the provision of a valve unloader (30) adapted, when engaged, to force the opening of said check valve, the engagement of said valve unloader being controlled to force the check valve open when the flow rate in the gas line is in a selected range of reduced flow rate.

9. A method according to claim 8 including the provision of a safeguard control configured to disengage said valve unloader and restore passive operation of the check valve upon detection of a condition of reverse flow or of incipient reverse flow in the gas line.

10. A method according to claim 9 including the provision of sensor means adapted to measure at least one parameter of the flow rate in the gas line and including the step of determining said condition of reverse flow or incipient reverse flow based on said at least one parameter.

11. A method according to claim 10 wherein said at least one parameter is also used to determine whether the instant flow rate in the gas line is in said selected range of reduced flow rate and to engage the valve unloader accordingly.

12. A method according to claim 10 or 11 wherein said at least one parameter includes a difference of pressure between a first pressure p1 measured at a point upstream the check valve and a second pressure p2 measured at point downstream the check valve, the direction upstream-downstream being according to the forward direction of flow allowed by the check valve.

13. A method according to claim 12 wherein a control system of the valve unloader is configured to:
disengage the valve unloader when the pressure drop is equal to or greater than a reference value corresponding to a minimum flow rate for passive operation of the check valve,
engage the valve unloader when the pressure drop is less than said reference value, but equal to or greater than a safety value corresponding to incipient reverse flow;
disengage the valve unloader when the pressure drop is less than said safety value.
